# EUROPEAN PATENT SPECIFICATION

(11) **EP 1 179 357 B1**
(45) Date of publication and mention of the grant of the patent: **27.08.2003**
(21) Application number: 01204099.4
(22) Date of filing: 13.03.2000
(51) Int. Cl.: B01D 33/03, B07B 1/46

(54) **Screen assembly, vibratory separator and method of screening**
Siebkonstruktion, Vibrationstrennvorrichtung und Verfahren zum Sieben
Ensemble tamis, séparateur vibrant et procédé de criblage

(30) Priority: 22.04.1999 US 296975
(43) Date of publication of application: 13.02.2002
(62) Divisional of application: 00915179.6
(73) Proprietor: Varco I/P, Inc., Houston, TX 77051 (US)
(72) Inventor: Adams, Thomas Cole, Hockley, TX 77447 (US); Seyffert, Kenneth Wayne, Houston, TX 77018 (US); Largent, David Wayne, Cleveland, TX 77327 (US); Schulte, David Lee, Broussard, LA 70518 (US); McClung, Guy Lamont, III, Spring, TX 77379 (US); Walker, Jeffrey Earl, Lafayette, LA 70501 (US); Murray, Hector M., Willis, TX 77379 (US); Maroney, James Francis, III, Houston, TX 77079 (US); Winkler, Joseph Charles, Houston, TX 77024 (US)
(74) Representative: Lucas, Brian Ronald

(56) References cited:
- WO-A-97/28906
- US-A- 1 462 804
- US-A- 5 551 575
- US-A- 5 598 930
- US-A- 5 868 929

## Description

The present invention relates to a screen assembly, a vibratory separator and a method of screening.

When drilling a wellbore in the earth's surface, drilling fluid is used to maintain the tip of a drill cool and to carry solids to the surface of the wellbore. Once at the surface the solids are removed from the drilling fluid which can then be re-used.

Types of apparatus that can remove solids from drilling fluid include a vibratory separator known as shale shaker. A typical shale shaker is disclosed in WO-A-96/33792. Typically, it is known to provide such equipment with one or more screens of wire mesh for filtering the drilling fluid. Typically, the wire mesh is very fine and does not have a high durability. It is advantageous to have a screen which has high durability.

Shale shakers are limited in size, especially those used on offshore platforms where space is at a premium. Accordingly, it is advantageous to filter a large quantity of particle laden mud using standard size shale shakers.

It is also advantageous for screens to be easily replaceable and repairable.

It is also advantageous to increase the residence period of the particle laden fluid on the screen.

According to the present invention there is provided a screen assembly for a vibratory separator, the screen assembly comprising a ridge-valley series of screening material having a plurality of alternating ridges and valleys and two spaced apart ends having ridge openings below the ridges, said openings covered with screen or mesh material characterised in that said openings are covered with screen or mesh material in a generally bulbous shape.

Preferably, the screen assembly further comprises a hook strip connection on spaced-apart sides of said ridge-valley series of screening material.

Advantageously, the ridges are of at least two different sizes.

Preferably, the ridges are of at least two different widths.

Advantageously, the ridges are of a least two different heights.

Preferably, the screen assembly comprises two side portions and a central portion, wherein said ridges decrease in size from said side portions towards said central portion.

Advantageously, the ridges decrease in height.

Preferably, the screening material further comprises at least a second layer of screening material.

Preferably, the screen assembly comprises a second screen, wherein the ridges of said second screen are in line with the ridges of said first screen.

Advantageously, the screen assembly further comprises a flat screen of screening material, said ridge-valley series on said flat screen.

Preferably, the flat screen is made of coarse mesh and said ridge-valley series are made of fine mesh.

The first aspect of the present invention also provides a vibratory separator comprising a screen assembly of the present invention, the screen assembly comprising a ridge-valley series of screening material having a plurality of alternating ridges and valleys and two spaced apart ends having ridge openings below the ridges, said openings covered with screen or mesh material characterised in that said ends are covered with screen or mesh material in a generally bulbous shape.

The first aspect of the present invention further provides a method for screening using the vibratory separator of the invention said method comprising the step of vibrating said ridge-valley series of screening material, pouring a particle laden fluid on to one of said ridge-valley series of screening material thereon, allowing fluid and predetermined size particles therethrough, and vibrating particles larger than said predetermined size to a far end of one other of said ridge-valley series of screening material.

For a better understanding of the present invention, reference will now be made, by way of example, to the accompanying drawings, in which:
Figure 1A is a perspective view of a screen apparatus according to the invention;
Figure 1B is an enlarged view of part of the screen apparatus of Figure 1A;
Figure 1C is a end view taken from line 1C-1C of Figure 1A;
Figure 1D is a end view of a second embodiment of a second screen, similar to the screen of Figure 1A;
Figure 1E is a perspective view of a third screen;
Figure 2A is a perspective view of a screen apparatus according to the present invention; Figure 2B is an enlarged view of part of the screen apparatus of Figure 2A; Figure 2C is a view along line 2C-2C of Figure 2A;
Figures 2D shows an end shape for ridge end covering according to the present invention;
Figure 3A is a top view of a screen apparatus according to the present invention; Figure 3B is an end view of the screen apparatus of Figure 3A;
Figure 4 is a perspective view of a screen according to the present invention;
Figure 5A is a perspective view of a screen part according to the present invention; and Figure 5B is a perspective view of a screen with parts as in Figure 5A.

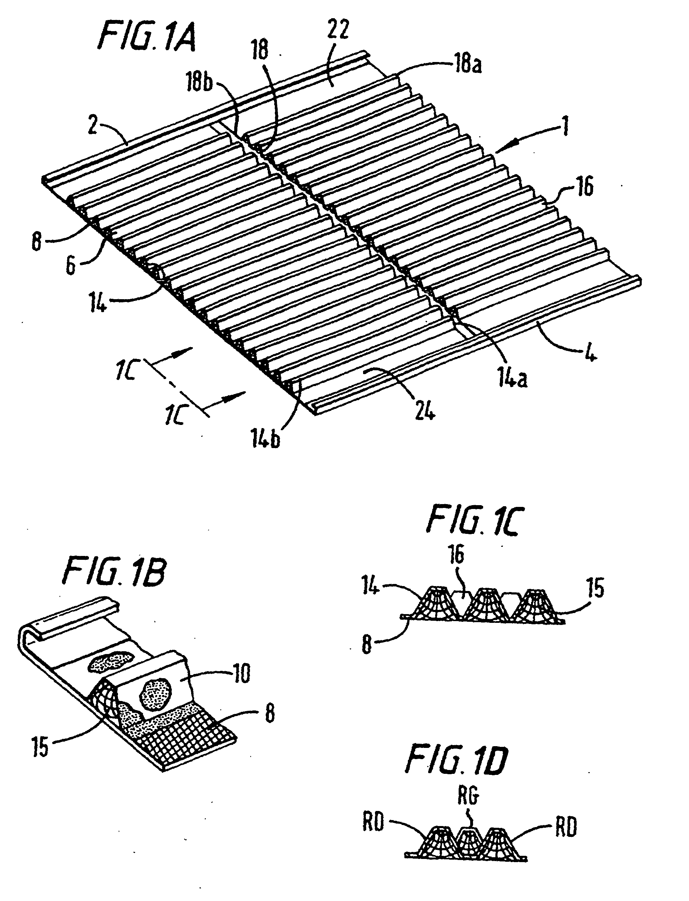

Figure 1A to 1D show a screen assembly generally identified by reference numeral 1 for use in, for example, a vibratory shaker such as a shale shaker. The present patent is derived from the earlier EP-A-1.163.037 (parent European Patent Application No. 00 915 179.6) derived from WO-A-00/64558 discloses a screen assembly for a vibratory separator, the screen assembly comprising at least a first and second ridge-valley series of screening material comprising a plurality of alternating ridges and valleys of screening material, each ridge having a ridge end, characterised in that at least the ridge ends of adjacent sides of said first and second ridge-valley series of screening material are offset or overlap when viewed from one end.

The screen assembly 1 has hook strips 2 and 4 on either side thereof. Screening material 6 is connected along the length of each hook strip by known methods, for example folding, welding, crimping together, epoxying, press/fiction fit, and/or interlocking of parts. In one aspect no underlying plate, straps, or strips and no frame are used with the screen assembly 1.

The screening material 6 may be any known screening material, screen and/or mesh or combination thereof and/or any screening material disclosed herein. In the screen 1 as shown, the screening material 6 includes a lower mesh (for example 1 to 80 mesh) 8 which may be a relatively coarse mesh and an upper mesh 10 (for example 8 to 400 mesh) and which may be a relatively fine mesh. Two fine mesh screens and one coarse mesh screen may also be used. The fine mesh may be bonded to the coarse mesh, sewed to the coarse mesh, glued to it, welded to it, and/or sintered to it.

An optional perforated plate or a series of straps or strips such as those disclosed in WO-A-94/23849, may be used below the coarse mesh. One, two, three or more layers of wire mesh may be used instead of or with such a plate, straps, or strips. In one particular aspect a flat coarse mesh (for example mesh 1 to mesh 12) is used instead of or in addition to a plate, straps, or strips.

Mesh (fine, coarse, or both) is folded over open exposed ends of ridges 14 and 18. This mesh can be substantially flat over the open ridge end or, as shown, it can protrude as part of a bulb or closed curve shape 15. Such shape can provide more screen area for separation and can deflect and re-route solids and fluid to a subsequent set of valleys. Alternatively any or all openings may be plugged with a solid, porous, or perforated plug glued or welded in place. Alternatively, instead of folding screening material and/or mesh over the ends of ridges, a separate piece of screen, screens, mesh, and/or meshes can be placed at an open ridge end and the edges of the piece attached to, connected to, interlocked with, interwoven with, and/or adhered to the edges of the ridge end opening. Also, it is within the scope of this invention for any ridge end to be closed off to fluid flow, to be covered with screen(s) and/or mesh, and/or to be plugged. It is within the scope of this invention for all ridge ends on one side of a series of ridges (for example on side 18a or 14a) to be closed off to flow while the other side's ridge ends (for example on side 18b or 14b) are covered with material which permits flow [for example perforated plug, screen(s), mesh(es)]. These possibilities for end closure and end openings may be used with any screen assembly disclosed herein. It is also within the scope of this invention for all ridge ends of all ridge sets to be open.

A series of valleys or troughs 16 is interspersed between the series of ridges 14. A second series of ridges 18 and valleys 20 is offset from the ridges 14/valleys 16, as shown in Figures 1A to 1D. Alternatively, as shown in Figure 1D the shape of one set of ridges RD can overlap (when viewed on end) the ridges RG of the other set of ridges. The ridges RD are also the same size as the ridges RG, as are the valleys. It is within the scope of this invention to employ any desired amount of such overlap. As shown, for example in Figures 1C and 1D, the ridges are of substantially the same height and ridge ends are of substantially the same cross-sectional area. It is also within the scope of this invention for the ridges of one set of ridges to be of a different width than those of the other set; for the one set to be wider or narrower than the second set; for ridges or ridge ends on one set to have a different cross-sectional area than those of another set; and/or to employ three, four, five, six or more series of offset ridges on a single screen. Optional side paths 22 and 24 may be eliminated by having a ridge edge or ridge adjacent a hook strip 2, 4 side or positioned against a frame side (when an optional frame is used) or side member if hook strips are not used.

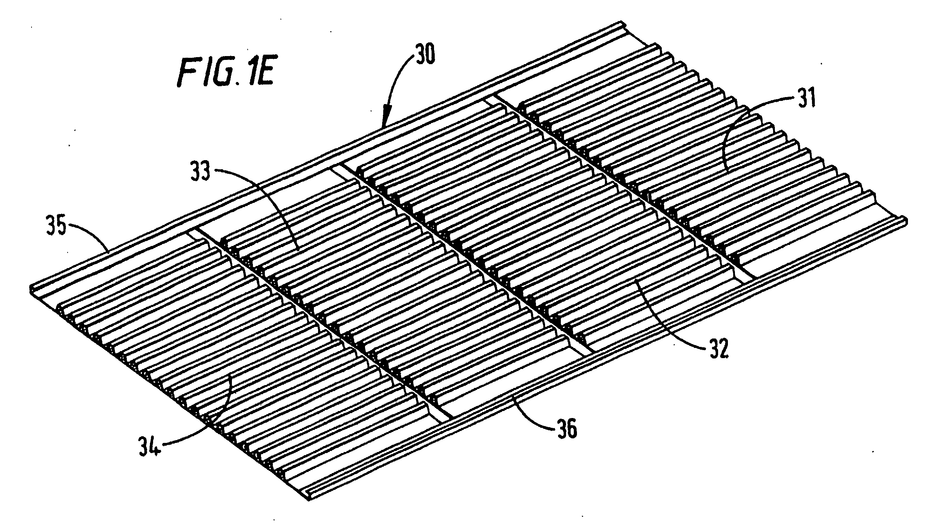

Figure 1E presents a screen apparatus 30 with four sets of offset ridges 31, 32, 33, 34 and hook strip sides 35, 36.

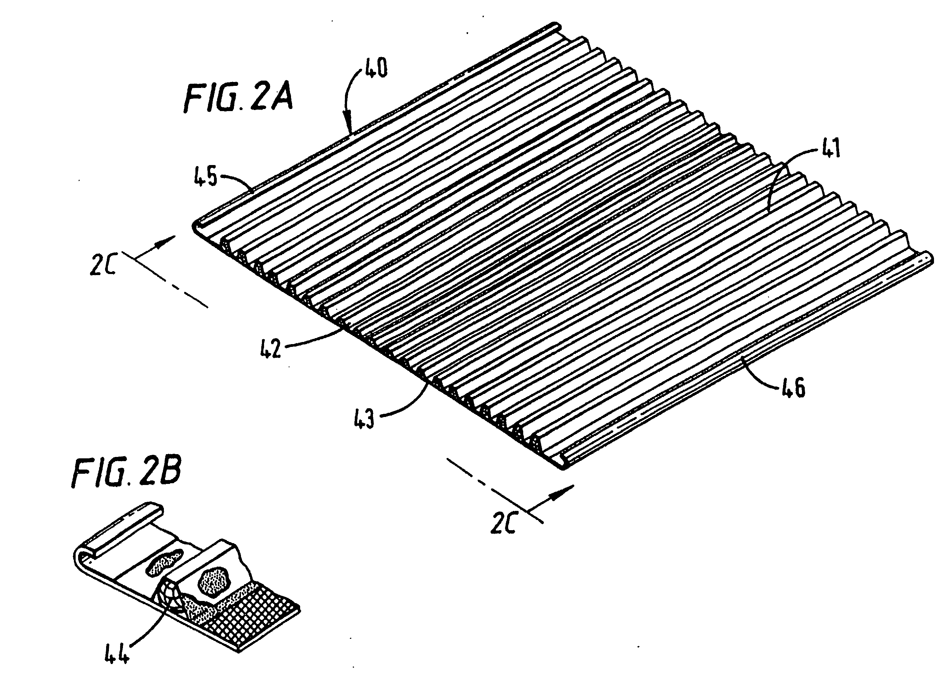

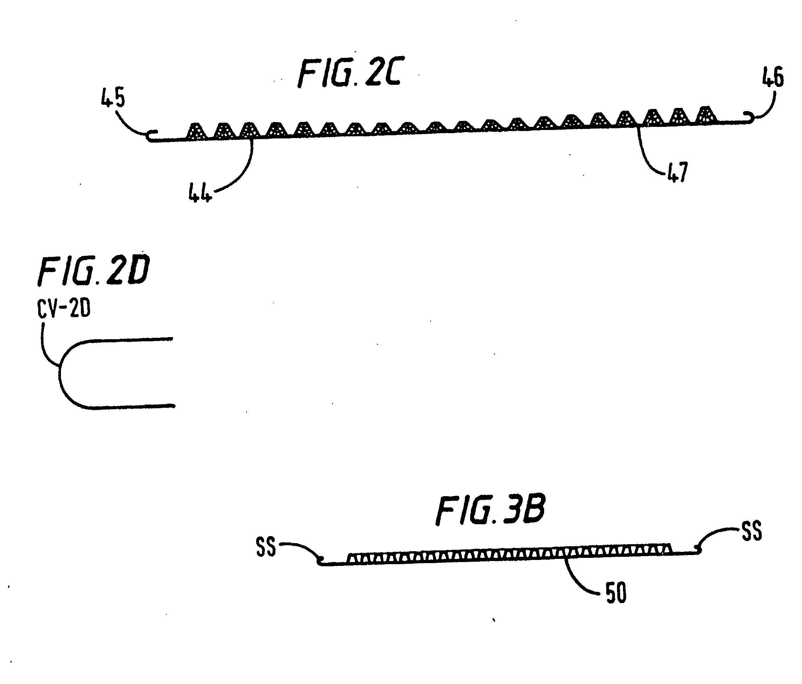

Figures 2A - 2C show a screen apparatus 40 for use in, for example a vibratory shaker such as a shale shaker. The screen apparatus 40 has a series of ridges 41 and valleys 42 of screening material 43 (like any of the screening material 16, Figure 1A). Ends of ridges are, optionally, covered with screen and/or mesh (or, alternatively, plugged as described above with either solid or perforated plugs) in a closed curved shape or bulbous shape 44 or they may be flat. The screening material 43 extends between side hook strips 45, 46 on a flat screen 47. As shown in Figure 2C, ridges of the set of ridges 41 may have different heights; for example alternating high and low, high in the middle and lower on the ends, or as shown in Figure 2C higher towards the sides and lower in the middle. Any such series of ridges with height differences, with width differences, and, therefore, with differing cross-sectional area and different amount of surface area may be used for any ridge series or part thereof on any screen disclosed herein. As shown in Figure 2C, the height (and also the cross-sectional area as viewed on end as in Figure 2C) of the ridges may gradually decrease from the sides of the screen assembly to the middle. Alternatively, the height (and cross-sectional area) may increase from the screen sides to the screen middle.

Figure 2D show a possible shape for ridge end coverings for the ends 44 (and for any ridge end disclosed herein). The covering is designated CV-2D.

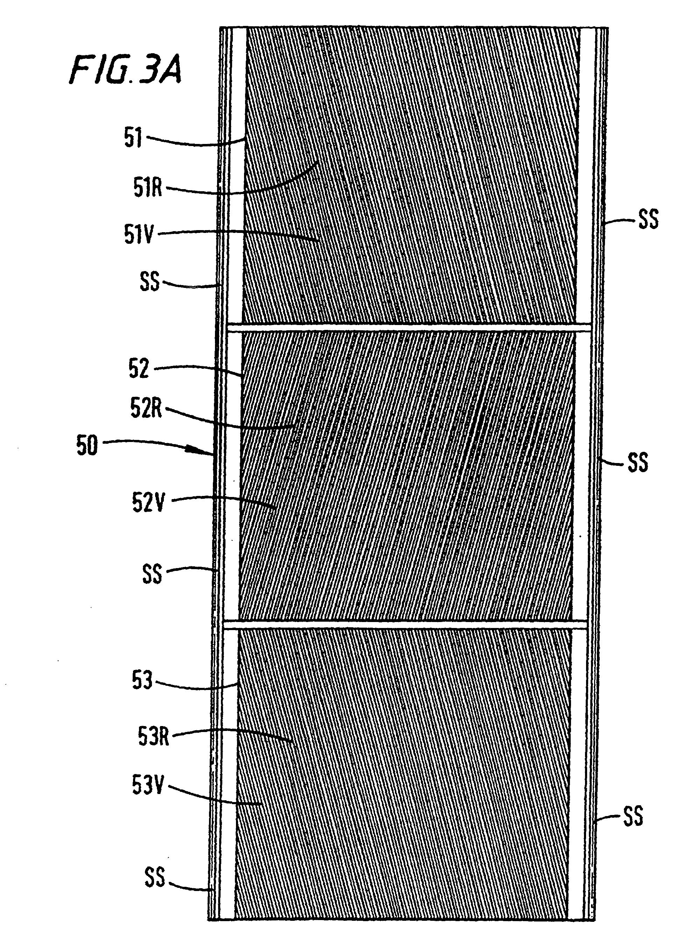

Figure 3A shows a screen apparatus 50 for use in, for example a vibratory shaker or shale shaker. The screen apparatus has three sub-screens 51, 52, 53 in an integral unit. Alternatively, three sub-screens may be connected together, for example with an interlock fit or suitable fasteners. It is within the scope of this invention to employ two, four or more appropriately sized sub-screens in an integral unit or interconnected. Each sub-screen has a series of alternating ridges and valleys 51R, 52R, 53R and 51V, 52V, 53V, respectively. Each ridge-valleys is at an angle to hook strip sides SS of each screen, and the angle of the ridge-valley series of sub-screen 52 is different from that of the sub-screens 51 and 53. As shown in Figure 3B, ridges 53R of the sub-screen 53 are lined up with ridges 52R of the sub-screen 52, but it is within the scope of this invention for ridges of any set to be offset with respect to ridges of another set. For any screen in Figures 1A - 3A the hook strip sides may be eliminated and any known suitable edge or side structure may be employed. Any one of the sub-screens 51, 52, 53 may be eliminated and any two adjacent ridge-valley series in any screen herein may be offset as are the sub-screens in Figure 3A.

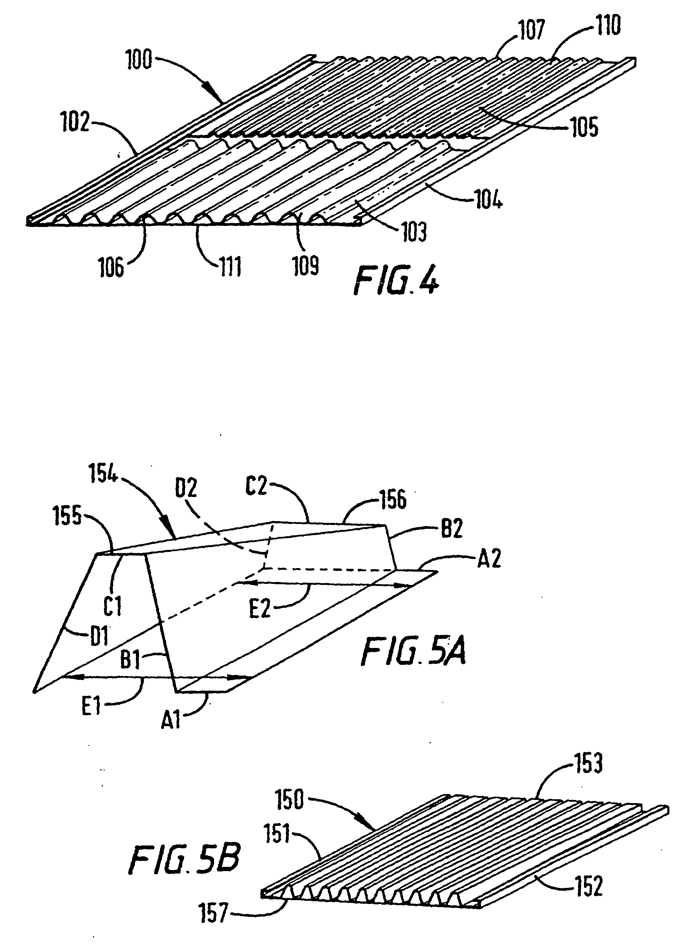

Figure 4 shows a screen assembly 100 according to the present invention with side hook strips 102 and 104 and a two ridge-valley series 103, 105. Ridges 106 of the series 103 are higher than ridges 107 of the series 105. Any suitable spacing between ridges may be employed. The series 103, 105 may be made of any mesh or screen or meshes or screen combination disclosed herein. Any suitable plate, frame, straps or strips may be used with the screen assembly 100; but in one aspect no such item is used. In use, particle laden mud flows from the lower height series 105 to the higher height series 103; but it is within the scope of this invention to flow from a higher height series to a lower height series. As shown screening material 109, 110 [any screen(s) and/or mesh(es) described herein] is connected to (in any way disclosed herein) an optional flat coarse mesh 111.

Figure 5B shows a screen assembly 150 comprising side hook strips 151, 152 and a series of ridge-valleys 153. Each ridge 154 of the series 153 is higher at one end than the other, as illustrated in Figure 7A. Any desired height difference may be employed and in use, particle laden fluid may flow either way between the sides, from the higher ridge end 155 to the lower end 156, or vice versa. Also, a ridge end top 155 is narrower than a ridge end top 156. Alternatively, the end 155 may be wider than the end 156. Any ridge disclosed herein or any series of ridges disclosed herein may have a height differential from end-to-end (as shown herein) and/or any ridge disclosed herein may have one ridge end of a particular ridge wider than the other end of the ridge and/or with different cross-sectional area. The series 153 is made of any screening material [screen(s) and/or mesh(es)] disclosed herein. The series 153 is, optionally, connected to a flat coarse screen (any disclosed herein) 157. Alternatively or in addition to the screen 1686 any plate, frame, strap or strips disclosed herein may be used. In one particular aspect the linear measurement E1=E2 and A1+B1+C1+D1 = A2+B2+C2+D2, although any suitable desired lengths may be employed, and one end (the end 155) is higher than the end 156. Ridge ends of the assembly 155, 156 (as may be any ridge end disclosed herein) may be covered or plugged in any way as described above.

## Claims

1. A screen assembly for a vibratory separator, the screen assembly comprising a ridge-valley series of screening material (14, 16; 31, 32, 33, 34; 43) having a plurality of alternating ridges (18; 41) and valleys (20; 42) and two spaced apart ends having ridge openings below the ridges, said openings covered with screen or mesh material **characterised in that** said openings are covered with screen or mesh material (14; 44) in a generally bulbous shape.

2. A screen assembly as claimed in Claim 1, further comprising a hook strip (1,4) connection on spaced-apart sides of said ridge-valley series of screening material (14, 16).

3. A screen assembly as claimed in Claim 1 or 2, **characterised in that** said ridges are of at least two different sizes.

4. A screen assembly as claimed in Claim 3, wherein said ridges (41) are of at least two different widths.

5. A screen assembly as claimed in Claim 3 or 4, wherein said ridges (41) are of a least two different heights.

6. A screen assembly as claimed in Claim 3, 4 or 5, said screen comprising two side portions and a central portion, wherein said ridges (41) decrease in size from said side portions towards said central portion.

7. A screen assembly as claimed in Claim 6, wherein said ridges (41) decrease in height.

8. A screen assembly as claimed in any of Claims 3 to 7, wherein said screening material (43) further comprises at least a second layer of screening material.

9. A screen assembly as claimed in any preceding Claim, comprising a second screen, wherein the ridges of said second screen are in line with the ridges of said first screen.

10. A screen assembly as claimed in any of preceding Claim, further comprising a flat screen of screening material, said ridge-valley series on said flat screen.

11. A screen assembly as claimed in Claim 10, wherein said flat screen is made of coarse mesh and said ridge-valley series are made of fine mesh.

12. A vibratory separator comprising a screen assembly as claimed in any preceding claim.

13. A method for screening using the vibratory separator as claimed Claim 12, said method comprising the step of vibrating said ridge-valley series of screening material, pouring a particle laden fluid on to one of said ridge-valley series of screening material thereon, allowing fluid and predetermined size particles therethrough, and vibrating particles larger than said predetermined size to a far end of one other of said ridge-valley series of screening material.

## Patentansprüche

1. Siebkonstruktion für eine Vibrationstrennvorrichtung, die Siebkonstruktion umfassend Kamm-Tal-Abfolgen von Siebmaterial (14, 16; 31, 32, 33, 34; 43) mit einer Vielzahl von alternierenden Kämmen (18; 41) und Tälern (20; 42) und zwei auf Abstand gehaltenen Enden mit Kammöffnungen unterhalb der Kämme, wobei die Öffnungen mit Sieboder Maschenmaterial bedeckt sind, **dadurch gekennzeichnet, daß** die Öffnungen mit Sieb- oder Maschenmaterial (14; 44) in einer allgemein bauchigen Form bedeckt sind.

2. Siebkonstruktion nach Anspruch 1, weiterhin umfassend eine Hakenleistenverbindung (1, 4) auf den auf Abstand gehaltenen Seiten der Kamm-Tal-Abfolgen des Siebmaterials (14, 16).

3. Siebkonstruktion nach Anspruch 1 oder 2, **dadurch gekennzeichnet, daß** die Kämme zumindest zwei unterschiedliche Größen aufweisen.

4. Siebkonstruktion nach Anspruch 3, wobei die Kämme (41) zumindest zwei unterschiedliche Breiten aufweisen.

5. Siebkonstruktion nach Anspruch 3 oder 4, wobei die Kämme (41) zumindest zwei unterschiedliche Höhen aufweisen.

6. Siebkonstruktion nach Anspruch 3, 4 oder 5, das Sieb umfassend zwei Seitenbereiche und einen zentralen Bereich, wobei die Kämme (41) von den Seitenbereichen in Richtung des zentralen Bereichs an Größe abnehmen.

7. Siebkonstruktion nach Anspruch 6, wobei die Kämme (41) an Höhe abnehmen.

8. Siebkonstruktion nach einem der Ansprüche 3 bis 7, wobei das Siebmaterial (43) weiterhin zumindest eine zweite Schicht an Siebmaterial umfaßt.

9. Siebkonstruktion nach einem der vorstehenden Ansprüche, umfassend ein zweites Sieb, wobei die Kämme des zweiten Siebs mit den Kämmen des ersten Siebs fluchten.

10. Siebkonstruktion nach einem der vorstehenden Ansprüche, weiterhin umfassend ein flaches Sieb aus Siebmaterial, wobei die Kamm-Tal-Abfolgen auf dem flachen Sieb vorliegen.

11. Siebkonstruktion nach Anspruch 10, wobei das flache Sieb aus groben Maschen und die Kamm-Tal-Abfolgen aus feinen Maschen gefertigt sind.

12. Vibrationstrennvorrichtung, umfassend eine Siebkonstruktion nach einem der vorstehenden Ansprüche.

13. Verfahren zum Sieben unter Verwendung der Vibrationstrennvorrichtung nach Anspruch 12, das Verfahren umfassend den Schritt des Versetzens in Vibration der Kamm-Tal-Abfolgen des Siebmaterials, das Gießen eines teilchenbeladenen Fluids auf eine der Kamm-Tal-Abfolgen des Siebmaterials, das Hindurchpassierenlassen des Fluids und von Teilchen vorbestimmter Größe und die Beförderung durch Vibration von Teilchen, die größer sind als die vorbestimmte Größe, zu einem entfernten Ende einer anderen Abfolge der Kamm-Tal-Abfolgen des Siebmaterials.

## Revendications

1. Assemblage de tamis pour un séparateur vibrant, l'assemblage de tamis comprenant des séries de crête-vallée d'un matériau de tamisage (14, 16 ; 31, 32, 33, 34 ; 43) comprenant une pluralité alternée de crêtes (18 ; 41) et de vallées (20 ; 42) et deux extrémités espacées et séparées ayant des ouvertures de crête sous les crêtes, lesdites ouvertures étant recouvertes d'une matière de tamis ou de treillis, **caractérisé en ce que** lesdites ouvertures sont recouvertes de la matière de tamis ou de treillis (14 ; 44) en une forme généralement bulbeuse.

2. Assemblage de tamis selon la revendication 1, comprenant de plus une bande à crochet (1, 4) reliée sur les côtés espacés et séparés desdites séries de crête-vallée du matériau de tamisage (14, 16).

3. Assemblage de tamis selon la revendication 1 ou 2, **caractérisé en ce que** lesdites crêtes possèdent au moins deux tailles différentes.

4. Assemblage de tamis selon la revendication 3, dans lequel lesdites crêtes (41) possèdent au moins deux largeurs différentes.

5. Assemblage de tamis selon la revendication 3 ou 4,
dans lequel lesdites crêtes (41) possèdent au moins deux hauteurs différentes.

6. Assemblage de tamis selon la revendication 3, 4 ou 5, ledit tamis comprenant deux parties latérales et une partie centrale, dans lequel lesdites crêtes (41) diminuent en taille à partir desdites parties latérales vers ladite partie centrale.

7. Assemblage de tamis selon la revendication 6, dans lequel lesdites crêtes (41) diminuent en hauteur.

8. Assemblage de tamis selon l'une quelconque des revendications 3 à 7, dans lequel ledit matériau de tamisage (43) comprend de plus au moins une deuxième couche de matériau de tamisage.

9. Assemblage de tamis selon l'une quelconque des revendications précédentes, comprenant un deuxième tamis, dans lequel les crêtes dudit deuxième tamis sont alignées avec les crêtes dudit premier tamis.

10. Assemblage de tamisage selon l'une quelconque des revendications précédentes, comprenant de plus un tamis plat de matériau de tamisage, lesdites séries de crête-vallée étant sur ledit tamis plat.

11. Assemblage de tamis selon la revendication 10, dans lequel ledit tamis plat est constitué de maille grossière et lesdites séries de crête-vallée sont constituées de maille fine.

12. Séparateur vibrant comprenant un assemblage de tamis selon l'une quelconque des revendications précédentes.

13. Procédé pour tamiser utilisant le séparateur vibrant selon la revendication 12, ledit procédé comprenant les étapes consistant à faire vibrer lesdites séries de crête-vallée du matériau de tamisage, verser un fluide chargé de particules sur l'une desdites séries de crête-vallée du matériau de tamisage sur celle-ci, laisser traverser le fluide et les particules de taille prédéterminée, et faire vibrer les particules plus grandes que ladite taille prédéterminée à une extrémité distante de l'autre desdites séries de crête-vallée du matériau de tamisage.
